# EUROPEAN PATENT SPECIFICATION

(11) **EP 1 209 889 B1**
(45) Date of publication and mention of the grant of the patent: **19.09.2007**
(21) Application number: 00125915.9
(22) Date of filing: 27.11.2000
(51) Int. Cl.: H04M 11/04, G08B 25/01

(54) **Mobile emergency support device**
Mobiles Gerät für Notfallunterstützung
Dispositif mobile de support d'urgence

(43) Date of publication of application: 29.05.2002
(73) Proprietor: Christ, Frank, Dr., 82266 Inning (DE); Ertl, Lorenz M., 82229 Seefeld-Hechendorf (DE)
(72) Inventor: Christ, Frank, Dr., 82266 Inning (DE); Ertl, Lorenz M., 82229 Seefeld-Hechendorf (DE)
(74) Representative: Best, Michael

(56) References cited:
- WO-A-00/30712
- DE-C- 19 707 681
- US-A- 5 781 101

## Description

The present invention relates to the field of emergency support. The term emergency support herein means support in a situation in which a person urgently needs help in form of adequate information how to act or behave. Emergency support thus relates to first aid or other urgent medical advice and action, in particular. This includes first medical action by skilled persons, i.e. paramedics, firemen or doctors, who face rare diseases or operate in remote areas (e.g. in the mountains, at sea or in the desert), as well as by unskilled persons accidentally present. However, emergency support also relates to technical emergency situations, e.g. breakdown of a machine in a factory with urgent necessity of restart, breakdown of a car on the road and far away from technical service, and so on.

In all these emergency situations, it is important that people that are actually not skilled to handle the situation by themselves are supported by adequate information in order to make the best of what can be done by these persons without losing time. As already noted above, this can also relate to persons which are skilled, however, are overcharged by the problems confronted with. Take for example paramedics or doctors in case of intoxications or technicians in case of very special technical problems.

WO 00/54205 discloses a system for advanced mobile health care processing comprising a portable electronic valet which can receive emergency support information from a mobile portal platform. However the electronic valet relies on the existence of a connection to the mobile portal platform via a wireless network such that it cannot provide emergency support if this connection is interrupted.

WO 00/30712 proposes an automated external defibrillator in the form of a mobile device for interactively providing emergency support information in the case of a heart attack. The defibrillator includes a processing unit coupled to a visual and oral output devices for executing program code stored in a memory, which processing unit generates cardiopulmonary resuscitation instructions and defibrillator operation instructions, and further includes means for notifying an emergency response system of the medical emergency by dialing a preprogrammed telephone number, e.g. 911, transmitting preprogrammed information regarding the location of the emergency to the emergency response system and confirming to the user that the emergency number has been called. There is no mention in WO 00/30712 of any other emergency situation except of heart attack where the defibrillator will proceed according to the program code stored in its memory. Therefore the known defibrillator will be of no use in any other emergency situation, for example in the case of a rescuer arriving at a car accident with one or more injured persons, because the rescuer will not be able to get appropriate emergency support information for dealing with unconsciousness, shock or heavy bleeding of injured persons. Similar problems arise in case of other medical emergencies, like intoxications or burns, or technical emergencies, like a failure of a machine or a breakdown of a car in a remote place.

DE 197 07 681 C discloses a mobile phone having a dedicated key for an emergency telephone number and further having electrodes in order to be able to record electrocardiographic signals of a patient and to transmit those signals by phone to a remote station in order to evaluate the signals at the station and provide appropriate emergency support information. However with a transmission of electrocardiographic signals it is merely possible to distinguish an acute cardiac arrest from a tachycardia or an asystole, however not to provide appropriate emergency support information for any other medical emergency.

Accordingly it is an object of the present invention to provide a further data processing device capable of giving adequate emergency support information.

This object is achieved with a data processing device according to claim 1.

The inventors have realized that adequate information is the key point in most emergency situations. Even with reduced technical possibilities in respect of instruments and equipment, very often much can be done by simple means with the adequate know-how. Such know-how exists, in principle, but is unfortunately usually not at hand in real emergency situations. E.g., people having a drivers' license are not able to remember details of their first aid training in case of an actual accident and, fearing to do something wrong, behave passive. Technicians running a machine or car drivers usually do not have the complete technical documentation relevant, especially not in a form that is adapted to quick action in a stress situation.

Emergency medicine in the western world is extremely well developed and provides an excellent service to the society, but even in densely populated countries like Germany or France it may take up to 20 minutes until expert help is on site. Once expert help is at site most treatment is fairly standardized and has very good results. Due to the fact that lack of oxygen after a cardiac arrest leads to irreversible damages on the CNS already after three minutes, current research in the area of emergency medicine clearly shows, that a significant future improvement in the outcome of emergencies can only be a result of influencing the management of the first 15-20 minutes after the accident, hence at the time were not trained people attend the victim.

What is typical for emergency situations, is that they appear by chance and without warning. Consequently, everyone can be confronted with such situations in his all-day life. From this fact, the inventors drew the conclusion, that technical means should be provided to solve the problem, which technical means are part of or can be part of all-day life. In this respect, it is to be seen that data processing devices play an increasing role in our all-day life and are almost permanently present in the one or other form. Thus, the invention relates to a data processing device that is specially equipped to provide emergency support information when asked for. Therefore, the device according to the invention includes input means so that the user can input a command defining the necessity for emergency support information, and thereafter defining the concrete details of the situation. With this input means, the user can run through a decision tree to arrive at the adequate information.

Further, the data processing device according to the invention comprises search means that are adapted to search the relevant information in response to the above mentioned user input. Namely, the user can switch through a decision tree by means of the input means and the search means. Information found or any information regarding the decision tree or any program schedule can be output by output means of the data processing device. Also the relevant information searched by the search means are output by these output means.

A key point is that the data processing device, in its generality, must be a mobile device. This is a consequence of the idea that the data processing device shall be a device present in all-day situations with high probability. Examples for such mobile data processing devices are those described below in detail, namely mobile phones, vehicle navigation apparatus, mini computers such as notebooks, so-called "palms" or "organizers". These data processing devices are mobile and, in the case of mobile phones and mobile mini computers, also hand-held devices, which is preferred. Also navigation apparatus can be hand-held, however, often are fixed in a vehicle, usually a car. The data processing devices named above all show a strong tendency to be more and more thoroughly present in all-day life. More and more people wear a mobile phone in both their professional and their private time. Many professional people have a mobile mini computer with them. More and more cars are equipped with navigation apparatus. The main reason is that the prices of these devices are decreasing steadily. Therefore, they will be even more widely spread in the future.

The search means include a memory to store the emergency support information. Thus, the data processing device can be a stand-alone device. However, it is not necessary that a memory is the only possible information source. The search means also comprise remote-data-transmission means to communicate with a remote transmitter to gain information therefrom. Thus, a combination of a memory with local information and stand-alone quality on the one hand and remotedata-transmission on the other is provided. This results in that the local data processing device, namely the search means included therein, can fetch additional information from the remote transmitter and information sources provided there, which implies that the search means in the local data processing device are equipped with a receiver and a transmitter for sending requests. Thus, the search means may search by sending request information and receiving answer information. In such a combination, the local memory can be used to store minimum information necessary for a minimum function of the data processing device in case of disturbed remote-data-transmission. Therefore, preferred that decision means are included to decide whether such data transmission is possible or not so that the device can be controlled correspondingly.

However, even if the search means and the local data processing device use the receiver only, this enables the device to update and complete the emergency support information available within the local memory.

According to a preferred embodiment of the invention, the data processing device is equipped with a dedicated emergency key, i.e. a press button, a switch, a dedicated field on a touch screen display or a similar device, in order to start an emergency support program. This dedicated key is advantageous in that it enables the user to start the emergency support function of a data processing device that normally is used for other purposes, e.g. as a mobile phone. A dedicated key for starting the emergency support program could be marked or coloured such that it draws attention, and thus is found easily without the necessity to remember details of how to manipulate the data processing device with special commands in word form, as numeral codes, or in any other complicated form.

Further preferably, the input means described above have voice input means so that the user does not need his hands when using the emergency support program. Also within the output means, voice output means can be provided for. This is advantageous compared to a mere graphical display because the user, being confronted with an emergency situation and acting under time pressure and stress, can take his eyes from the display in order to simultaneously act while hearing the support information necessary. Naturally, a combination of both voice input means and voice output means is optimal.

In a further embodiment the input means may additionally or alternatively comprise at least two keys e.g. to input the information "yes" or "no" into the data processing device of the present invention. The output device may additionally or alternatively comprise a display such as a display for visually supporting the emergency information by pictures, videos or written text.

In case of a data processing device that is not a mobile phone by itself, this device can be adapted to be connected to a mobile phone so that the search means can use the remote-data-transmission equipment (local transmitter and receiver) of the mobile phone. Incidentally, an UMTS phone, i.e. a mobile phone especially adapted for data transmission, is preferred.

Another preferred choice for a data processing device according to the invention which is not as common as the embodiments mentioned above, is an automatic defibrillator. However, for people with cardiac diseases or related risks, such defibrillators also may belong to their all-day life and thus are usually available. The same applies to paramedics and comparable persons which could have a defibrillator in their equipment. Also this defibrillator can be connected to a mobile phone, naturally.

Finally, the invention not only belongs to a data processing device as described above that may take a part of the information or the information in general from a remote transmitter. The invention further belongs to the complete system comprising this data processing device and the remote station including the remote transmitter and a remote search means that searches the emergency support situation according to request information sent by the local search means.

A preferred embodiment of the invention will be described hereunder.
Figure 1 shows a summary of the structure of the operation of a data processing device according to the embodiment;
Figure 2 shows the details of the decision tree mentioned in figure 1, figure 2 being divided into three parts wherein part2 is the continuation of part 1 to the right side and part 3 is the continuation of part 1 at the bottom.

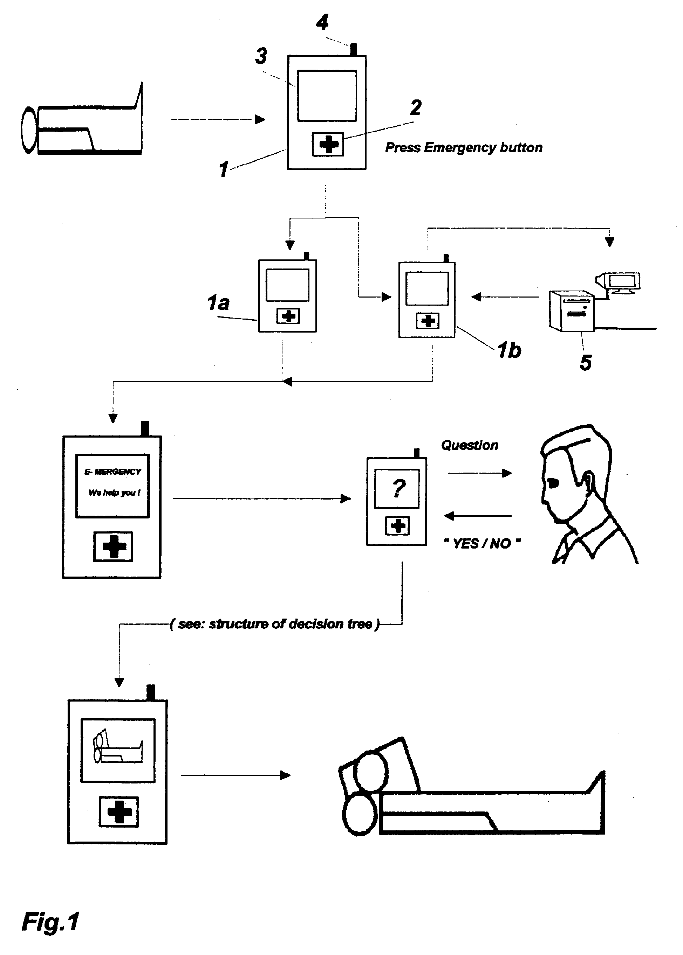

At the top of figure 1, it is symbolized that a person tries to help another person having an acute medical problem. In the following, the helping person will be named "user" and the person to be helped will be named "patient". The first arrow pointing from the sketched emergency situation to data processing device 1 means that the user, realizing that an emergency situation has appeared, shall refer to said data processing device. In the present embodiment, this data processing device 1 is a UMTS mobile phone, the conventional parts of which, however, not being shown in detail. Of course, mobile phone 1 is provided with a key matrix for the entry of information input, with a speaker and with a microphone. Figure 1 shows that mobile phone 1 further has a display screen 3 and an antenna 4 which stands for a remote-data-transmission receiver and transmitter according to the invention. It is clear that display screen 3 and remote-data-transmission means 4 (transmitter, receiver, antenna) can be those the mobile phone 1 is provided with anyway.

Special for the invention, however, is an emergency key 2 which is a simple push button in this case. It is marked with a red cross to symbolize its meaning. In the emergency situation shown, the user will push this emergency button 2 without thinking about details. Then, decision means of mobile phone 1 will decide, whether a remote data-transmission between mobile phone 1 and a remote information station 5 including a remote transmitter and memory means for emergency support information is possible in the present situation or not. Remote information station 5 is equipped with a computer control in order to communicate with mobile phone 1 and to search for the information appropriate in response to the requests coming from search means within mobile phone 1. In case that such remote data transmission is not possible, the above-mentioned search means of mobile phone 1 will use its own memory for the following operation steps. This memory, which is not shown explicitly, is updated in regular intervals by remote information station 5 in order to hold mobile phone 1 in a ready-to-function state as regards its emergency support function. The case of an independently working mobile phone is shown with the left phone 1a, the case of a remote data transmission with the right phone 1b.

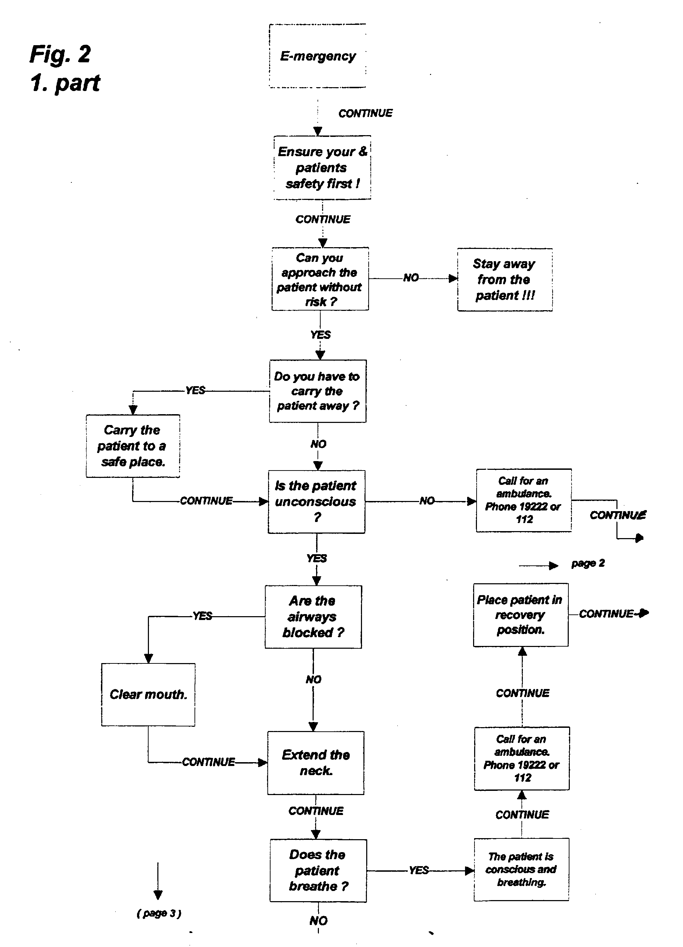

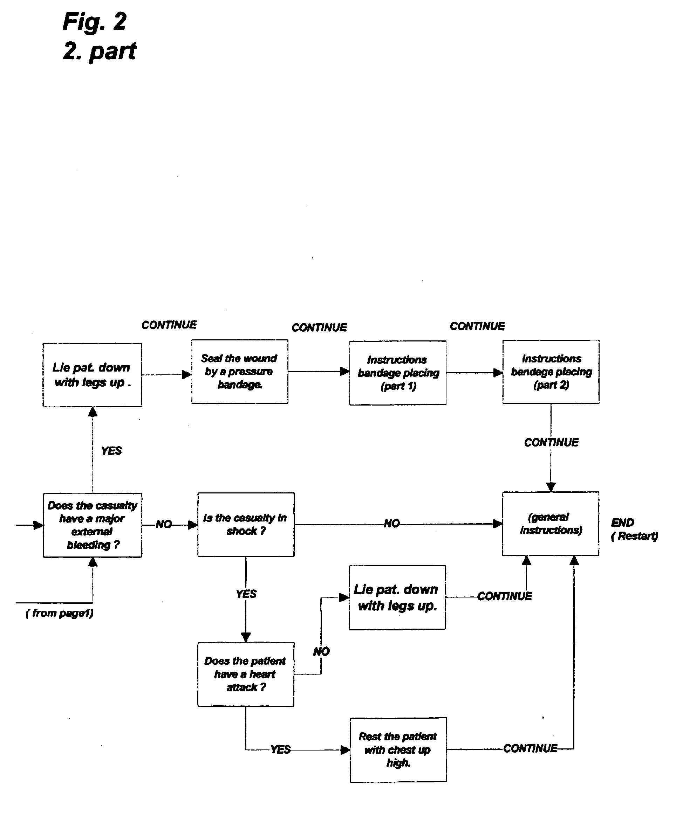

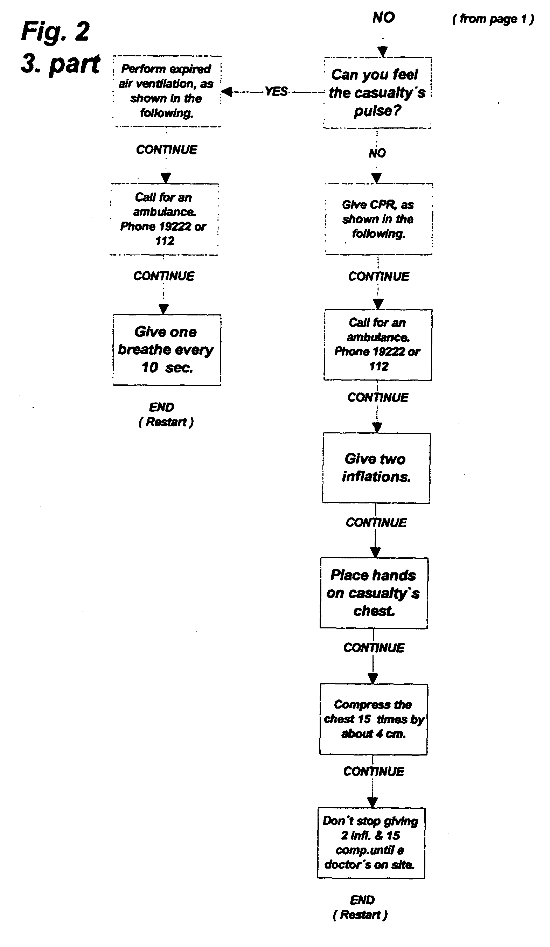

In both cases, display screen 3 will show a message to inform the user that the emergency support system is ready to work. This message could be "Emergency: We help you" as shown in figure 1. Now the user knows that the emergency support system, which has been activated by means of emergency button 2, can be operated simply orally, i.e. by using the microphone and the speaker which embody voice input means and voice output means. In this embodiment, the user will answer questions of the emergency support system by using the words "yes" and "no" only, and the system (namely the search means) will react thereon by displaying additional questions or commands for rescue action. The details of this interaction between the user and the emergency support system is shown as an exemplary decision tree in figure 2. As an example, a scheme to illustrate concrete rescue action can be displayed, as shown at the bottom of figure 1. The user will then be able to imitate the action shown and to thereby take the right steps in helping the patient in an optimal way.

Figure 2 consists of three parts on a first, second and third page of figure 2. The second part is the right extension of the first part, the third part is the lower extension of the first part. Beginning with the top of the first part, the emergency support systems signalizes its activation by displaying the term "Emergency" on the display screen. After that display, the user is informed to check the patient's safety and his own one before starting any rescue action. This screen content appears without any user reaction. Following that, again without any user action, the question appears whether the patient can be approached without risk for the user himself. If not, the user should stay away (and try to call for other help). If yes, it is asked whether the patient should be carried away, and, if yes, it is shown how to do this. If the patient is unconscious, the mouth should be cleared if the air ways are blocked. Then, the neck shall be extended to ensure breathing, and breathing should be checked. Without breathing, the pulse shall be checked. With pulse, it is shown how to perform expired air ventilation, the ambulance shall be called for and air ventilation shall be continued as shown in the left part of the third page of figure 2. Without pulse, a cardio-pulmonary-reanimation (CPR) shall be performed as shown on the display, the ambulance shall be called for and air ventilation shall be continued in the way shown until a doctor is on sight, as shown in the right column of the third part of figure 2.

Two cases lead to the lower right column of the first part of figure 2, and thereby to the second part. One is, in case of an unconscious patient, that the patient is breathing, however. This leads to the command to place the patient into a recovery position and to the question whether there are major external bleedings. The second case is that the patient is conscious which leads to the same question over the order to call for the ambulance. From the question on external bleedings, if there are such bleedings, the system commands to position the patient into the backward position with feet up and to seal the wounds by a pressure bandage which is shown by detailed instructions in several parts on the screen.

If there are no external bleedings, further action is only required if the patient is in shock. Depending on whether the patient has a heart attack or not, the above mentioned backward position with feet up or a position with chest up high shall be preferred.

Naturally, the above described action scheme and the embodiment of the data processing device shown in figure 1 are only exemplary illustrations of the invention.

## Claims

1. A data processing device (1) for emergency support by interactively providing emergency support information, said data processing device (1) being a mobile device and comprising:
input means for receiving user input,
output means (3) for outputting emergency support information in response to user input from said input means,
search means for searching appropriate emergency support information for a plurality of different emergency situations including at least cardiac arrest, bleeding and shock and/or technical emergency situations,
a memory for storing said emergency support information,
a remote-data-transmission receiver (4) for receiving said emergency support information from a remote transmitter (5),
said search means comprising a local transmitter for sending request information to said remote transmitter (5), in response to user input, in order to receive emergency support information related to said user input from said remote transmitter (5),
decision means to decide whether a remote-data-transmission between said data processing device and said remote transmitter (5) can be accomplished,
said search means being adapted to exclusively search in said memory in case that said decision means has decided that said connection can not be accomplished.

2. A data processing device (1) according to claim 1, said memory comprising an interchangeable data carrier.

3. A data processing device (1) according to one of the preceding claims, including a dedicated emergency key (2) to start an emergency support program interactively providing said emergency support information.

4. A data processing device (1) according to one of the preceding claims, said input means comprising a voice input means for hand-free user input by user voice.

5. A data processing device (1) according to one of the preceding claims, said output means (4) comprising voice output means.

6. A mobile phone including a data processing device (1) according to claim 5.

7. A mobile phone according to claim 6, being a UMTS phone.

8. A vehicle navigation apparatus including a data processing device (1) according to one of claims 1-5.

9. A vehicle navigation apparatus according to claim 8, including a data processing device (1), said vehicle navigation apparatus being adapted to be connected to a mobile phone to serve as said remote-data-transmission receiver and as said local transmitter.

10. A mini computer including a data processing device (1) according to one of claims 1 to 5.

11. A mini computer according to claim 10, including a data processing device (1), said mini computer being adapted to be connected to a mobile phone to serve as said remote-data-transmission receiver and as said local transmitter.

12. An automatic defibrillator including a data processing device (1) according to one of claims 1 to 5.

13. An automatic defibrillator according to claim 12, including a data processing device (1), said automatic defibrillator being adapted to be connected to a mobile phone to serve as said remote-data-transmission receiver and as said local transmitter.

14. A system comprising a device according to one of claims 1 to 13, and a remote station (5) including said remote transmitter and remote search means for searching emergency support information in response to said request information.

## Patentansprüche

1. Datenverarbeitungsvorrichtung (1) zur Notfallunterstützung durch interaktive Bereitstellung von Notfallunterstützungsinformationen, wobei die Datenverarbeitungsvorrichtung (1) eine mobile Vorrichtung ist und umfasst:
Eingabemittel zum Empfang einer Benutzereingabe,
Ausgabemittel (3) zum Ausgeben von Notfallunterstützungsinformationen ansprechend auf eine Benutzereingabe aus den Eingabemitteln,
Suchmittel zum Suchen von passenden Notfallunterstützungsinformationen für eine Mehrzahl von verschiedenen Notfallsituationen, einschließlich mindestens Herzstillstand, Blutung und Schock und/oder technische Notfallsituationen,
einen Speicher zum Speichern der Notfallunterstützungsinformationen,
einen Datenfernübertragungs-Empfänger (4) für den Empfang der Notfallunterstützungsinformationen von einem entfernten Sender (5),
wobei die Suchmittel einen lokalen Sender umfassen, um ansprechend auf eine Benutzereingabe Anforderungsinformationen an den entfernten Sender (5) zu senden, um von dem entfernten Sender (5) Notfallunterstützungsinformationen zu erhalten, die mit der Benutzereingabe in Beziehung stehen,
Entscheidungsmittel, um zu entscheiden, ob eine Datenfernübertragung zwischen der Datenverarbeitungsvorrichtung und dem entfernten Sender (5) ausgeführt werden kann,
wobei die Suchmittel angepasst sind, um in dem Fall, dass die Entscheidungsmittel entschieden haben, dass die Verbindung nicht ausgeführt werden kann, ausschließlich in dem Speicher zu suchen.

2. Datenverarbeitungsvorrichtung (1) nach Anspruch 1, wobei der Speicher einen austauschbaren Datenträger umfasst.

3. Datenverarbeitungsvorrichtung (1) nach einem der vorangehenden Ansprüche, einschließend eine zweckbestimmte Notfalltaste (2), um ein Notfallunterstützungsprogramm zu starten, das die Notfallunterstützungsinformationen interaktiv bereitstellt.

4. Datenverarbeitungsvorrichtung (1) nach einem der vorangehenden Ansprüche, wobei die Eingabemittel ein Spracheingabemittel für eine freihändige Benutzereingabe durch Benutzerstimme umfassen.

5. Datenverarbeitungsvorrichtung (1) nach einem der vorangehenden Ansprüche, wobei die Ausgabemittel (4) Sprachausgabemittel umfassen.

6. Mobiltelefon, einschließend eine Datenverarbeitungsvorrichtung (1) nach Anspruch 5.

7. Mobiltelefon nach Anspruch 6, wobei es ein UMTS-Telefon ist.

8. Fahrzeugnavigationsgerät, einschließend eine Datenverarbeitungsvorrichtung (1) nach einem der Ansprüche 1-5.

9. Fahrzeugnavigationsgerät nach Anspruch 8, einschließend eine Datenverarbeitungsvorrichtung (1), wobei das Fahrzeugnavigationsgerät angepasst ist, um es mit einem Mobiltelefon zu verbinden, das als der Datenfernübertragungs-Empfänger und als der lokale Sender dienen soll.

10. Minicomputer, einschließend eine Datenverarbeitungsvorrichtung (1) nach einem der Ansprüche 1-5.

11. Minicomputer nach Anspruch 10, einschließend eine Datenverarbeitungsvorrichtung (1), wobei der Minicomputer angepasst ist, um ihn mit einem Mobiltelefon zu verbinden, das als der Datenfernübertragungs-Empfänger und als der lokale Sender dienen soll.

12. Automatischer Defibrillator, einschließend eine Datenverarbeitungsvorrichtung (1) nach einem der Ansprüche 1 bis 5.

13. Automatischer Defibrillator nach Anspruch 12, einschließend eine Datenverarbeitungsvorrichtung (1), wobei der automatische Defibrillator angepasst ist, um ihn mit einem Mobiltelefon zu verbinden, das als der Datenfernübertragungs-Empfänger und als der lokale Sender dienen soll.

14. System, umfassend eine Vorrichtung nach einem der Ansprüche 1 bis 13 und eine entfernte Station (5), die den entfernten Sender und entfernte Suchmittel zum Suchen von Notfallunterstützungsinformationen ansprechend auf die Anforderungsinformationen einschließt.

## Revendications

1. Dispositif de traitement de données (1) pour support d'urgence par la fourniture interactive d'informations de support d'urgence, ledit dispositif de traitement de données (1) étant un dispositif mobile et comprenant :
des moyens d'entrée pour recevoir des entrées de l'utilisateur,
des moyens de sortie (3) pour sortir des informations de support d'urgence en réponse aux entrées de l'utilisation à partir desdits moyens d'entrée,
des moyens de recherche pour chercher des informations appropriées de support d'urgence pour une pluralité de situations d'urgence différentes, y compris au moins des situations d'arrêt cardiaque, de saignement, de choc et / ou d'urgence technique,
une mémoire pour stocker lesdites informations de support d'urgence,
un récepteur (4) de transmission de données à distance pour recevoir lesdites informations de support d'urgence d'un émetteur à distance (5),
lesdits moyens de recherche comprenant un émetteur local pour envoyer une demande d'informations audit émetteur (5) à distance, en réponse aux entrées de l'utilisateur, afin de recevoir des informations de support d'urgence en rapport avec lesdites entrées de l'utilisateur dudit émetteur (5) à distance,
des moyens de décision pour décider si une transmission de données à distance entre ledit dispositif de traitement de données et ledit émetteur à distance (5) peut être effectuée,
lesdits moyens de recherche étant adapté pour chercher exclusivement dans ladite mémoire dans le cas où lesdits moyens de décision ont décidé que ladite connexion ne peut être effectuée.

2. Dispositif de traitement de données (1) selon la revendication 1, ladite mémoire comprenant un support de données interchangeable.

3. Dispositif de traitement de données (1) selon l'une quelconque des revendications précédentes, comprenant une touche d'urgence spécialisée (2) pour lancer un programme de support d'urgence fournissant de manière interactive lesdites informations de support d'urgence.

4. Dispositif de traitement de données (1) selon l'une quelconque des revendications précédentes, lesdits moyens d'entrée comprenant un moyen d'entrée vocal pour les entrées de l'utilisateur à main libre par la voix de l'utilisateur.

5. Dispositif de traitement de données (1) selon l'une quelconque des revendications précédentes, lesdits moyens de sortie (4) comprenant des moyens de sortie vocaux.

6. Téléphone mobile comprenant un dispositif de traitement de données (1) selon la revendication 5.

7. Téléphone mobile selon la revendication 6, étant un téléphone UMTS.

8. Appareil de navigation pour véhicule comprenant un dispositif de traitement de données (1) selon l'une des revendications 1 - 5.

9. Appareil de navigation pour véhicule selon la revendication 8, comprenant un dispositif de traitement de données (1), ledit appareil de navigation pour véhicule étant adapté pour être connecté à un téléphone mobile pour servir en tant que ledit récepteur de transmission de données à distance et en tant que ledit émetteur local. -

10. Mini ordinateur comprenant un dispositif de traitement de données (1) selon l'une des revendications 1 - 5.

11. Mini ordinateur selon la revendication 10, comprenant un dispositif de traitement de données (1), ledit mini ordinateur étant adapté pour être connecté à un téléphone mobile pour servir en tant que ledit récepteur de transmission de données à distance et en tant que ledit émetteur local.

12. Défibrillateur automatique comprenant un dispositif de traitement de données (1) selon l'une des revendications 1 - 5.

13. Défibrillateur automatique selon la revendication 12, comprenant un dispositif de traitement de données (1), ledit défibrillateur automatique étant adapté pour être connecté à un téléphone mobile pour servir en tant que ledit récepteur de transmission de données à distance et en tant que ledit émetteur local.

14. Système comprenant un dispositif selon l'une quelconque des revendications 1 à 13, et un poste à distance (5) comprenant ledit émetteur à distance et des moyens de recherche à distance pour chercher des informations de support d'urgence en réponse à ladite demande d'informations.
